# EUROPEAN PATENT APPLICATION

(11) **EP 4 836 471 A1**
(43) Date of publication of application: **04.11.2026**
(21) Application number: 25305628.7
(22) Date of filing: 30.04.2025
(51) Int. Cl.: H04W 12/03, H04W 12/041, H04W 12/043, H04L 9/08

(54) **A METHOD FOR ESTABLISHING A SHARED ENCRYPTING SECRET KEY FOR ENCRYPTING COMMUNICATION, CORRESPONDING BASE STATION, SECURE ELEMENT AND SYSTEM**

(71) Applicant: THALES DIS FRANCE SAS, 92190 Meudon (FR)
(72) Inventor: DANY, Vincent, 13400 AUBAGNE (FR); DEMARTY, Joel, 35520 MONTREUIL-LE-GAST (FR); PAULIAC, Mireille, 13470 CARNOUX EN PROVENCE (FR)
(74) Representative: Scheer, Luc

(57) **Abstract**

The invention concerns a method for establishing a first shared encrypting secret key K_{NG-PLS} for encrypting communication between:
- a User Equipment, UE, comprising a secure element, and
- a first base station,
the UE and the first base station having computed an initial shared key K_{gNB-init} according to TS 133.501, the method comprising:
- computing at the UE and the first base station, a first shared secret key K_{PLS-1} between the UE and the first base station by exploiting physical layer properties of the radio channel during a PLS-SKG procedure between the UE and the first base station;
- deriving, at the UE and at the first base station, the first shared encrypting secret key K_{NG-PLS} from the initial shared key K_{gNB-init} and the first shared secret key K_{PLS-1}, for obtaining a first derived shared encrypting secret key K_{NG-PLS} for encrypting communication;
- using, at the UE and at the first base station, the first derived shared encrypting secret key K_{NG-PLS} instead of the initial shared key K_{gNB-init} for encrypting communication between the UE and the first base station.

## Description

### FIELD

The present invention concerns telecommunications and more precisely security in mobile networks (like 4G, 5G and LTE telecommunication networks) during the AKA (Authentication and Key Agreement) process.

The invention is linked to the encryption system of Perfect Forward Secrecy (PFS) and proposes a solution ensuring PFS for the session key used during an AKA.

### BACKGROUND

PFS is also called FS (Forward Secrecy) or PS (Perfect Secrecy) and refers to an encryption system that changes the keys used to encrypt and decrypt information frequently and automatically. This ongoing process ensures that even if the most recent key is hacked, a minimal amount of sensitive data is exposed.

Web pages, calling apps, and messaging apps all use encryption tools with perfect forward secrecy that switch their keys as often as each call or message in a conversation, or every reload of an encrypted web page. This way, the loss or theft of one decryption key does not compromise any additional sensitive information - including additional keys.

One can determine whether forward secrecy is present by inspecting the decrypted, plain-text version of the data exchange from the key agreement phase of session initiation. An application or website's encryption system provides perfect forward secrecy if it does not reveal the encryption key throughout the session.

PFS helps protect session keys against being compromised even when the server's private key may be vulnerable. A feature of specific key agreement protocols, an encryption system with forward secrecy generates a unique session key for every user-initiated session. In this way, should any single session key be compromised, the rest of the data on the system remains protected. Only the data guarded by the compromised key is vulnerable.

PFS is characterized by the fact that an attacker or spy cannot compute old (previous) session keys, even if he knows the long-term key used for deriving these sessions keys. Thus, PFS enables entirely private, short-term key exchanges between a client and a server. Normally, web servers secure communication sessions with special encryption keys. Whenever a client wants to talk to the server, the client generates a pre-primary secret and uses the server's special key to encrypt it. Only people who know the original key of the server can decrypt what client and server discuss.

Without PFS, an attacker can spy on the server's communications unobserved. This is because the server uses the same key to encrypt each pre-primary secret with each client.

If the server secures communications with PFS, every time a new client starts a conversation with the server, both (the server and the client) generate a unique pre-primary secret that is totally private. This secret is also ephemeral, and only lasts for one communication. The client never sees the long-term key, and a hacker is limited to only what is shared during that one conversation.

Generating a unique session key for each transaction limits hackers to obtaining data from one exchange per successful attack. A server protected by PFS is simply a less appealing target for a hacker because it demands more effort and time.

For focusing on radio telecommunication systems, current 3GPP systems use USIM (Universal Subscribed Identity Module) pre-shared key-based protocols to authenticate subscribers. The addition of replay protection and mutual authentication in the third generation (3G) 3GPP systems has preserved secrecy of the session key. However, new trust models have shown that some attacks are possible, like for example explained in:
- "3GPP AKA Protocol: Simplified Authentication Process" from A. Choudhary and R. Bhandari, International Journal of Advanced Research in Computer Science and Software Engineering, Volume 4, Issue 12, December 2014;
- "A vulnerability in the UMTS and LTE authentication and key agreement protocols" from S. F. Mjølsnes and J-K Tsay, Proceedings of the 6th international conference on Mathematical Methods, Models and Architectures for Computer Network Security: computer network security, October 2012.

These articles show that the standard trust models have flaws that were not taken in account.

There have also been attacks against systems where AKA is used in a different setting than initially intended, for example like described in: "Breaking Cell Phone Authentication: Vulnerabilities in AKA, IMS and Android" from J. G. Beekman and C. Thompson, 7th USENIX Workshop on Offensive Technologies, WOOT '13, August 2013.

Other reports of compromised long term pre-shared keys used in AKA indicate a need to look into solutions that allow a weaker trust model, in particular for 5G systems.

An example is described in "The Great SIM Heist" from J. Scahill and J. Begley, February 19, 2015. It is noted in this article that some security can be retained in this situation by providing PFS for the session key, like proposed in "Authentication and Authenticated Key Exchanges" from W. Diffie, P. van Oorschot and M. Wiener, Designs, Codes and Cryptography 2, pp. 107-125, June 1992: If AKA would have provided PFS, compromising the pre-shared key would not be sufficient to perform passive attacks (the attacker is, in addition, forced to be a Man-In-The-Middle during the AKA run).

The advantages of SKG (Secret Key Generation) based on PLS, compared to cryptographic schemes that lack sufficient theoretical proofs to guarantee security, is that physical layer security (PLS) techniques have attracted a great deal of attention from researchers for their solid information-theoretic security proofs. SKG permits to generate, at the level of two entities communicating together, to encrypt their communication with the same secret key.

Additionally, the challenges that the cryptography scheme is encountering are anticipated to be resolved by the key generation technology based on the PLS mechanism. The SKG is to generate keys according to physical-layer characteristics, such as channel fading, noise, or device features, to realize specific security functions. SKG uses the randomness and unpredictability of the wireless channel to generate the key required for information transmission between the sender and the receiver and frequently updates the key in accordance with the wireless channel's time-varying characteristics to further improve security performance.

Concerning the current prior art, a document ("A USIM compatible 5G AKA protocol with perfect forward secrecy" written by Jari Arkko, Karl Norrman, Mats Näslund and Bengt Sahlin, Ericsson Research) proposes a solution allowing to introduce PFS and protection against passive attacks on the air-interface protection keys into the existing architectures and protocol structures shared by previous generations of 3GPP networks. In this paper, a construction for 3GPP AKA that provides Perfect Forward Secrecy for the session key is described. The constructs prevent an attacker, with access to the long-term pre-shared key, from simply eavesdropping the challenge RAND in the AKA, and use the RAND and long-term pre-shared key to derive the session key.

The problem is that this prior art solution is based on Diffie-Hellman, a protocol that needs a lot of computations on the UE and network sides, thus wasting power, and that is long to be performed.

A technique called PLS-SKG is known from EP-3,398,290. PLS-SKG is a process for monovalent one-to-one extraction of keys from a propagation channel.

This document proposes to extract keys from a propagation channel, these keys being intended to protect data exchanged between a user A and a user B via the propagation channel. The exposed method comprises the following steps:
a) Measuring, by way of the receivers of the users A and B, signals S coming from each emitter of the other user, measuring the parameters of the corresponding propagation channel, and estimating the corresponding complex impulse responses of the propagation channel or corresponding complex frequency responses of the propagation channel,
b) Selecting, in a univalent manner, for each user A, B, a set of complex channel coefficients resulting from the estimations of the complex impulse responses of the propagation channel or of the complex frequency responses of the propagation channel, and retaining the coefficients that exhibit a cross-correlation lower than an adjustable predetermined threshold value,
c) Quantifying and formatting, for each user, the selected complex channel coefficients by applying a geometrical mesh of the complex plane in which the channel coefficients take their value, numbering the complex coefficients according to the mesh to which they belong, and error correction techniques to said numbering,
d) Using, in a univalent and unequivocal manner, for each user, digital data resulting from said quantification and from said formatting in the form of secret keys so as to encrypt the string of transmitted data.

The invention proposes to introduce Perfect Forward Secrecy (PFS) to protect access stratum (AS) exchanges by combining PLS-SKG and USIM symmetric-based AKA authentication, like described further.

### SUMMARY

The invention proposes a method for establishing a first shared encrypting secret key K_{NG-PLS} for encrypting communication between:
- a User Equipment, UE, comprising a secure element, and
- a first base station to which the UE is connected,
the UE and the first base station having computed an initial shared key K_{gNB-init} according to TS 133.501 (for example version 17.5.0), the method comprising:
- computing at the UE and the first base station, a first shared secret key K_{PLS-1} between the UE and the first base station by exploiting physical layer properties of the radio channel during a PLS-SKG procedure between the UE and the first base station;
- deriving, at the UE and at the first base station, the first shared encrypting secret key K_{NG-PLS} from the initial shared key K_{gNB-init} and the first shared secret key K_{PLS-1}, for obtaining a first derived shared encrypting secret key K_{NG-PLS} for encrypting communication;
- using, at the UE and at the first base station, the first derived shared encrypting secret key K_{NG-PLS} instead of the initial shared key K_{gNB-init} for encrypting communication between the UE and the first base station.

Preferably, the first derived shared encrypting secret key K_{NG-PLS} is changed over time by deriving a refreshed first shared encrypting secret key, K_{F-NG-PLS}, from:
- a standardized shared key K_{NG-RAN*} according to TS 133.501 (for example version 17.5.0);
- a refreshed shared secret key, K_{F-PLS1}, obtained by exploiting physical layer properties of the radio channel during a fresh PLS-SKG procedure on a later point of time, between the UE and the first base station.

Advantageously, when the UE performs a handover procedure from the first base station to a second base station, the UE and the second base station, for establishing a second shared encrypting secret key K_{NG-PLS} between the UE and the second base station:
- compute a second shared secret key K_{PLS-2} between the UE and the second base station exploiting physical layer properties of the radio channel during a PLS-SKG procedure between the UE and the second base station;
- derive the second shared encrypting secret key K_{NG-PLS} from a shared key K_{NG-RAN*} according to TS 133.501 and the second shared secret key K_{PLS-2}, for obtaining a second shared encrypting secret key K_{NG-PLS};
- use, at the UE and at the second base station, the second derived shared encrypting secret key K_{NG-PLS} instead of the shared key K_{NG-RAN*} according to TS 133.501.

In case of handover, the second shared encrypting secret key K_{NG-PLS} is preferably changed over time by deriving a refreshed second shared encrypting secret key, K_{F-NG-PLS}, from:
- a standardized shared key K_{NG-RAN*} according to TS 133.501 (for example version 17.5.0);
- a refreshed shared secret key, K_{F-PLS2}, obtained by exploiting physical layer properties of the radio channel during a fresh PLS-SKG procedure on a later point of time, between the UE and the second base station.

The invention also concerns a secure element of a User Equipment, UE, the secure element being arranged for computing a shared encrypting secret key K_{NG-PLS} for encrypting communication between the UE and a base station, the secure element having computed a standardized shared key K_{NG-RAN*} according to TS 133.501 (for example version 17.5.0),
the secure element being also arranged for:
- computing a shared secret key (K_{PLS1}, K_{PLS2}) obtained by exploiting physical layer properties of the radio channel during a PLS-SKG procedure between the UE and the base station;
- deriving the shared encrypting secret key K_{NG-PLS} from the shared key K_{NG-RAN*} and the shared secret key (K_{PLS1}, K_{PLS2}), for obtaining a derived shared encrypting secret key K_{NG-PLS},
- using, at the secure element, the derived shared encrypting secret key K_{NG-PLS} instead of the shared key K_{NG-RAN*} for encrypting communication between the UE and the base station.

Preferably, the secure element is also arranged for changing over time the derived shared encrypting secret key K_{NG-PLS} by deriving a refreshed shared encrypting secret key, K_{F-NG-PLS}, from:
- the standardized shared key K_{NG-RAN*} according to TS 133.501 (for example version 17.5.0);
- a refreshed shared secret key, K_{F-PLS}, obtained by exploiting physical layer properties of the radio channel during a PLS-SKG procedure, on a later point of time, between the UE and the base station.

The invention also proposes a base station of a telecommunication network provided for communicating with a User Equipment, UE, the base station being arranged for computing a shared encrypting secret key K_{NG-PLS} for encrypting communication between the base station and the UE, the base station having computed a standardized shared key K_{NG-RAN*} according to TS 133.501 (for example version 17.5.0),
the base station being also arranged for:
- computing a shared secret key (K_{PLS1}, K_{PLS2}) obtained by exploiting physical layer properties of the radio channel during a PLS-SKG procedure between the base station and the UE;
- deriving the shared encrypting secret key K_{NG-PLS} from the shared key K_{NG-RAN*} and the shared secret key (K_{PLS1}, K_{PLS2}), for obtaining a derived shared encrypting secret key K_{NG-PLS},
- using the derived shared encrypting secret key K_{NG-PLS} instead of the shared key K_{NG-RAN*} for encrypting communication between the base station and the UE.

The base station is preferably also arranged for changing over time the derived shared encrypting secret key K_{NG-PLS} by deriving a refreshed shared encrypting secret key, K_{F-NG-PLS}, from:
- the standardized shared key K_{NG-RAN*} according to TS 133.501 (for example version 17.5.0);
- a refreshed shared secret key, K_{F-PLS}, obtained by exploiting physical layer properties of the radio channel between the base station and the UE during a PLS-SKG procedure, on a later point of time.

Finally, the invention concerns a system for establishing a first shared encrypting secret key K_{NG-PLS} for encrypting communication between:
- a User Equipment, UE, comprising a secure element, and
- a first base station part of radio access network of a telecommunication network,
the UE and the base station storing an initial shared key K_{gNB-init} according to TS 133.501 (for example version 17.5.0), the system comprising, at the secure element and at the first base station, means for:
- computing a first shared secret key K_{PLS-1} between the UE and the first base station by exploiting physical layer properties of the radio channel during a PLS-SKG procedure between the UE and the first base station;
- deriving, the first shared encrypting secret key K_{NG-PLS} from the initial shared key K_{gNB-init} and the first shared secret key K_{PLS-1}, for obtaining a first derived shared encrypting secret key K_{NG-PLS} for encrypting communication;
- using the first derived shared encrypting secret key K_{NG-PLS} instead of the initial shared key K_{gNB-init} for encrypting communication between the UE and the first base station.

Preferably, these means are provided for:
- changing the first derived shared encrypting secret key K_{NG-PLS} over time by deriving a refreshed first shared encrypting secret key, K_{F-NG-PLS}, from:
   - a standardized shared key K_{NG-RAN*} according to TS 133.501 (for example version 17.5.0);
   - a refreshed shared secret key, K_{F-PLS1}, obtained by exploiting physical layer properties of the radio channel during a fresh PLS-SKG procedure on a later point of time, between the UE and the first base station.

Advantageously, when the UE performs a handover procedure from the first base station to a second base station, these means, at the UE and the second base station, for establishing a second shared encrypting secret key K_{NG-PLS} between the UE and the second base station:
- compute a second shared secret key K_{PLS-2} between the UE and the second base station exploiting physical layer properties of the radio channel during a PLS-SKG procedure between the UE and the second base station;
- derive the second shared encrypting secret key K_{NG-PLS} from a shared key K_{NG-RAN*} according to TS 133.501 (for example version 17.5.0) and the second shared secret key K_{PLS-2}, for obtaining a second shared encrypting secret key K_{NG-PLS};
- use, at the UE and at the second base station, the second derived shared encrypting secret key K_{NG-PLS} instead of the shared key K_{NG-RAN*} according to TS 133.501 (for example version 17.5.0).

Preferably, these means, at the UE and the second base station, change the second shared encrypting secret key K_{NG-PLS} over time by deriving a refreshed second shared encrypting secret key, K_{F-NG-PLS}, from:
- a standardized shared key K_{NG-RAN*} according to TS 133.501 (for example version 17.5.0);
- a refreshed shared secret key, K_{F-PLS2}, obtained by exploiting physical layer properties of the radio channel during a fresh PLS-SKG procedure on a later point of time, between the UE and the second base station.

### BRIEF DESCRIPTION OF THE DRAWINGS

The present invention will be better understood by reading the following description of the figures that represent:
Figure 1, the current key hierarchy, as described for example in ETSI TS 133 501 V17.5.0;
Figure 2, a copy of figure 6.9.2.1.1-1 of "Model for the handover key chaining" from document ETSI TS 133 501 V17.5.0 (2022-05) - TECHNICAL SPECIFICATION 5G; Security architecture and procedures for 5G System (3GPP TS 33.501 version 17.5.0 Release 17);
Figure 3, a flowchart of a preferred method for implementing the invention;
Figure 4, an example of key chaining according to the present invention.

### DETAILED DESCRIPTION

The article "Secret key generation scheme from Wifi and LTE reference signals" from Christiane L. Kameni Ngassa, Renaud Molière, François Delaveau, Taghrid Malzoum, Alain Sibille and Nir Shapira describes the principle of PLS-SKG (Physical Layer Security - Secret Key Generation).

PLS-SKG is a known technique used in wireless systems.

PLS-SKG relies on channel parameters for extracting secret keys from the wireless channel, which is the random source to generate identical keys and characterized by several physical properties such as multipath, fading, and noise. Key channel parameters used in SKG impact on the security and performance of the generated keys. Such channel parameters include channel impulse response (CIR), channel frequency response (CFR), phase information, RSS (Received Signal Strength), precoding matrix index (PMI), and so on. Traditionally, network security relies on cryptography methods at the network layer. But, since wireless networks operate in an open medium, these schemes are vulnerable to active attacks and eavesdropping. Additionally, encryption keys are difficult to distribute and manage due to the dynamic nature of wireless networks.

PLS-SKG can solve the key distribution problem by means of channel-based secret key generation (SKG), which is lightweight and easily scalable. The keyless approach requires knowledge of the channel and noise of eavesdroppers, which cannot be obtained in most situations. SKG relies on the random characteristics of the wireless channel to generate secret keys.

The invention proposes to introduce PFS to protect access stratum (AS) exchanges. Access stratum is a functional layer in the wireless telecom protocol stacks between radio network and user equipment, responsible for transporting data over the wireless connection and managing radio resources.

The proposed solution combines PLS and USIM symmetric-based AKA authentication, like described further.

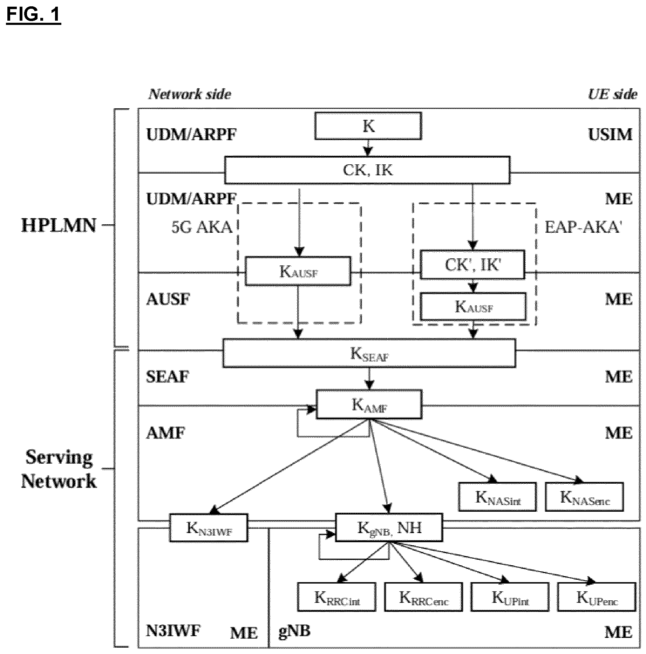

Figure 1 represents the key hierarchy known from the prior art, for example described in ETSI TS 133 501, V 17.5.0, Release 17, "5G; Security architecture and procedures for 5G System (3GPP TS 33.501 version 17.5.0 Release 17)", at section 6.2.1 (Key hierarchy, key derivation, and distribution scheme).

The following describes the keys of the key hierarchy generation in a 5G system in detail.

The keys related to authentication include the following keys: K, CK/IK.

In case of EAP-AKA', the keys CK', IK' are derived from CK and IK. The key hierarchy includes the following keys: K_{AUSF}, K_{SEAF}, K_{AMF}, K_{NASint}, K_{NASenc}, K_{N3IWF}, K_{gNB}, K_{RRCint}, K_{RRCenc}, K_{UPint} and K_{UPenc}.

The keys for the AUSF (AUthentication Server Function) in the home network (HPLMN) are:
- K_{AUSF} is a key derived:
   - by the ME (Mobile Equipment) and the AUSF from CK', IK' in case of EAP-AKA', CK' and IK' is received by the AUSF as a part of a transformed AV (Authentication Vector) from the ARPF (Authentication credential Repository and Processing Function); or,
   - by the ME and the ARPF from CK, IK in case of 5G AKA, K_{AUSF} is received by the AUSF as a part of the 5G HE (Home Environment) AV from the ARPF.
- K_{SEAF} is an anchor key derived by the ME and the AUSF from K_{AUSF}. K_{SEAF} is provided by the AUSF to the SEAF (SEcurity Anchor Function) in the core network.

The key for the AMF in the core network:
- K_{AMF} is a key derived by the ME and the SEAF from K_{SEAF}. K_{AMF} is further derived by the ME and source the AMF when performing horizontal key derivation.

The keys for NAS signaling:
- K_{NASint} is a key derived by the ME and the AMF from K_{AMF}, which shall only be used for the protection of NAS signaling with a particular integrity algorithm.
- K_{NASenc} is a key derived by the ME and the AMF from K_{AMF}.

The key for the NG-RAN:
- K_{gNB} is a key derived by the ME and the AMF from K_{AMF}. K_{gNB} is further derived by the ME and source gNB when performing horizontal or vertical key derivation. The key K_{gNB} is used as a key K_{eNB} between the ME and the ng-eNB.

The keys for UP (Uplink) traffic:
- K_{UPenc} is a key derived by the ME and the gNB from K_{gNB}.
- K_{UPint} is a key derived by the ME and the gNB from K_{gNB}.

The keys for RRC (Radio Resource Control) signaling:
- K_{RRCint} is a key derived by the ME and the gNB from K_{gNB}
- K_{RRCenc} is a key derived by the ME and the gNB from K_{gNB}.

The intermediate keys:
- NH is a key derived by the ME and the AMF.
- K_{NG-RAN*} is a key derived by the ME and the NG-RAN (i.e., gNB or ng-eNB) when performing a horizontal or vertical key derivation using a KDF (Key Derivation Function).
- K'_{AMF} is a key that can be derived by the ME and the AMF when the UE moves from one AMF (Access and Mobility Management Function) to another during inter AMF mobility.

There is also a key for the non-3GPP access in this figure: K_{N3IWF} is a key derived by the ME and the AMF from K_{AMF}.

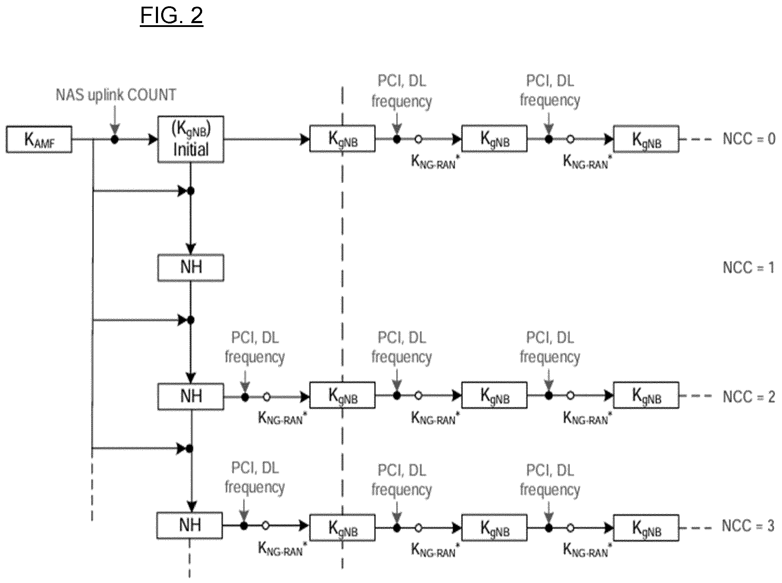

Figure 2 is a copy of figure 6.9.2.1.1-1 of "Model for the handover key chaining" from document ETSI TS 133 501 V 17.5.0 Release 17 - TECHNICAL SPECIFICATION 5G; Security architecture and procedures for 5G System (3GPP TS 33.501 version 17.5.0 Release 17).

This figure represents the state of the art of a chaining of keys over time.

Time expands from the left to the right of this figure, and vertically (descending) are represented hops between base stations (handovers).

In the prior art represented in figure 2, the key K_{AMF} present at the level of the UE and the network (in its AMF) is combined with a counter NAS uplink COUNT to obtain an initial shared key K_{gNB} (noted "(K_{gNB}) Initial" in figure 2) that is used by the base station and the UE to encrypt exchanged messages (or in general "communication").

"(K_{gNB}) Initial" is at the level of the vertical dotted line and is noted K_{gNB}.

To derive K_{gNB}, a key derivation function KDF is applied to K_{gNB} to replace K_{gNB} by another key K_{NG-RAN*}. To do so, the following key is computed: ${K}_{NG - RAN *} = KDF \left({K}_{gNB}, PCI, DL frequency\right)$ where:
- KDF is the key derivation function,
- PCI is the Physical Cell Identifier and is used for cell identity during cell selection procedure to indicate the physical layer identity of the cell covered by the base station (here xNB1,) and
- DL frequency is the frequency of the downlink signal of the base station.

This is explained in Annex A11 (K_{NG-RAN*} derivation function for target gNB) of TS 133.501 v 17.5.0.

When an initial AS security context needs to be established between a UE and a gNB, the UE and the AMF of the network derive a key K_{gNB} and a Next Hop (NH) parameter. The key K_{gNB} and the parameter NH are derived from K_{AMF}.

A NH Chaining Counter (NCC) is associated with each K_{gNB} and NH parameter. Every K_{gNB} is associated with the NCC corresponding to the NH value from which it was derived. At initial setup, K_{gNB} is derived directly from K_{AMF}, and is then considered to be associated with a virtual NH parameter with NCC value equal to zero (NCC=0).

At initial setup, the derived NH value is associated with the NCC value one (NCC=1).

The UE and the gNB use the key K_{gNB} to secure the communication between them. On handovers, the basis for the K_{gNB} that will be used between the UE and the target gNB, called K_{NG-RAN*}, is derived from either the currently active K_{gNB} or from the NH parameter. As NH parameters are only computable by the UE and the AMF, it is arranged so that NH parameters are provided to gNBs from the AMF in such a way that PFS can be achieved.

During the Initial Registration procedure 100, the key K_{AMF} present at the level of the UE and the network (in the AMF of the core network) is combined with a counter NAS (Non-Access Stratum) uplink COUNT to obtain an initial shared key K_{gNB} that is traditionally used by the base station and the UE to encrypt exchanged messages, i.e. the communication.

K_{AMF} is a key derived by the ME and the SEAF from K_{SEAF}. K_{AMF} is further derived by the ME and source AMF (i.e. the AMF of the serving or home base station) when performing horizontal key derivation (horizontal derivation corresponds to a derivation performed when a UE stays camped on a same base station - no handover occurs during "horizontal derivation", "vertical derivation" being the terms used for derivations of keys during handover procedures).

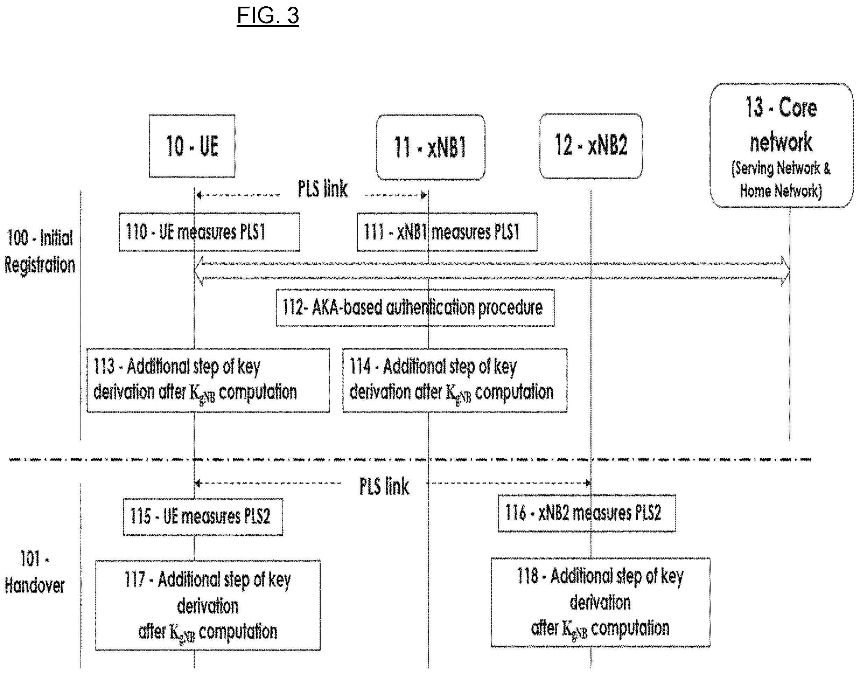

Figure 3 is a flowchart of a preferred method for implementing the invention in a 5G network. In this figure, different entities of a telecommunication system are represented:
- A UE (User Equipment) 10, typically a smartphone, a PDA (Personal Digital Assistant), an loT device or a tablet, ... comprising a secure element like a SIM card, a UICC Universal Integrated Circuit Card), a eUICC (embedded UICC) or an iUICC (integrated UICC) for example, integrating a USIM function. A component comprising a USIM will generally be called hereafter a secure element. The UE is the combination of the following two elements: The physical terminal, called mobile equipment (ME), and a secure element representing the subscription and containing its key parameters.
- A first base station 11 and a second base station 12. A base station BS (Base Station) can be a BTS (Base Transceiver Station) in 2G, a NB (Node B) in 3G, an eNB in 4G (eNB standing for "enhanced NodeB"), a gNB in 5G (gNB standing for "next generation NodeB"), a ng-eNB (also referred to as eLTE eNB) that is the evolution of eNB supporting connectivity to LTE Core Network (EPC) and 5GC, or any base station evolution in next generations (other types of BS from future generations);
- A network 13, acting here as a core network consisting of serving network and home network. The serving network can thus be the one of a visited PLMN (Public Land Mobile Network), also called VPLMN, or a HPLMN (Home Public Land Mobile Network). The network 13 can also be a private network, also known under the acronym NPN (Non-Public Network) that provides mobile services for a dedicated set of users or "things" that are usually part of a single organization.

The method of the invention applies when the UE 10 performs an initial registration with the network 13 through a base station of the network or during a handover process (handshake) from the first base station 11 to the second base station 12 (the UE 10 moves from the radio coverage of the base station 11 to the radio coverage of the base station 12).

Two distinct procedures are explained below: A first one (procedure 100 - Initial Registration) during which the UE 10 is under coverage of the base station 11, and a second one (procedure 101 - Handover) during which the UE 10 enters under coverage of the base station 12.

As an initial remark, the Initial Registration procedure 100 of figure 3 corresponds, in the state of the art, to the first key chaining where NCC=0. The handover procedure 101 of figure 3 corresponds, in the state of the art, to the second key chaining where NCC=2.

At the beginning of the Initial Registration procedure 110, the UE 10 is under coverage of the base station 11 and both entities measure a value PLS1 (UE 10 measures PLS1 at step 110 and base station 11 measures PLS1 at step 111). PLS1 is for example the level of noise of the received signal (sent by the other entity) measured on known bytes sent at the beginning of a session. This noise is evolving over time and thanks to the PLS-SKG known method, it is possible, at the level of the UE 10 and of the base station 11, to determine a common (shared) key by these entities. This key can then be used for encrypting or cyphering the communication (PK based solution).

As it will be seen hereafter, the measures of PLS1 allow to compute a key K_{PLS1}, that will be called first shared secret key K_{PLS1}. Thus, K_{PLS1} is determined by exploiting the random radio propagation features between the UE 10 and the first base station during a PLS-SKG procedure between them. This can also be understood that the determination of K_{PLS1} is performed by exploiting physical layer properties of the radio channel during a PLS-SKG procedure between the UE and the first base station.

The key K_{PLS1} is stored in the secure element and in the first base station.

Then, at step 112, a usual AKA-based authentication procedure is performed between the UE 10 and the network 13. This procedure is performed without using the key K_{PLS1}, i.e. by using the key pre-shared between the UE and the network. This pre-shared key is called K_{NG-PLS} and its computation/generation will be explained below.

The AMF is located in the serving network, which can be the home network or in the visited network, depending on the location of the UE. The AMF/SEAF thus belongs to the serving network, which can be the home network or to the visited network (a visited PLMN).

After mutual authentication, exchanges of encrypted communication by K_{NG-PLS} can occur between the UE 10 and the network 13 through the xNB1 referenced 11.

At later steps 113 and 114, another key K_{NG-PLS} replaces the current key K_{NG-PLS}, as it will appear below (for taking in account some potential changes of the radio path between the UE 10 and the xNB1 11).

In case of handover (the UE 10 moves from the radio coverage of xNB1 to the radio coverage of xNB2), the procedure 101 applies:
At steps 115 and 116, PLS link measurements are performed by the UE 10 and xNB2 12. Both entities measure a value PLS2 that corresponds to a shared key K_{PLS2}.

Here also, K_{PLS2} is computed by exploiting physical layer properties of the radio channel between the UE 10 and the second base station 12 during a PLS-SKG procedure. Thus, here also, the physical layer properties of the radio channel obtained during a PLS-SKG procedure between the UE and the base station are exploited.

K_{PLS2} is used for deriving an encryption key of the communication between UE 10 and the xNB 12. This is also the case for K_{PLS1} mentioned above.

At steps 117 and 118, similar key derivations as those occurring at steps 113 and 114 are performed for taking in account some potential changes of the radio path between the UE 10 and the xNB2 12.

In the scope of the invention, this key K_{gNB} is modified by a key K_{PLS1} corresponding to the measure PLS1 to obtain a key K_{NG-PLS}.

Generally speaking, we have:
- the measured value PLS permits to generate a shared secret key K_{PLS};
- this key K_{PLS} is used to derive a new key K_{NG-PLS} from K_{NG-RAN*}.

### Expressed otherwise:

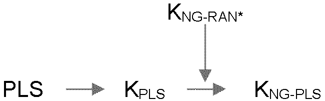

with K_{NG-PLS} = KDF (K_{PLS}, K_{NG-RAN*})
with KDF a Key Derivation Function
and → representing the chaining

As already explained, the PLS measures are performed on a PLS link established between the UE 10 and a base station 11. This PLS link is a standard (common) communication between the UE 10 and the base station 11 during which the PLS level is measured.

More precisely, PLS-SKG is based on the measure of the difference between a (perfect) signal sent by one entity and received by another entity (with noise).

The key K_{PLS} is regenerated each time the UE is changing the connected cell (vertical derivation, i.e. handover procedure) and, also preferably regularly, or randomly, during the time when the UE is connected to a same base station (horizontal derivation).

For stationary devices for example (e.g. loT devices - Internet of Things), K_{PLS} regeneration could also be introduced by adding new PLS measurements on horizontal derivation. The PLS measurement can be triggered either during a suspendConfig message or RRCResumeRequest and then generate a corresponding key K_{PLS}.

suspendConfig has been introduced in 5G radio networks protocol to instruct a mobile device to go to RRC_Inactive state with an RRC Release message that contains a 'suspendConfig'. RRC means "Radio Resource Control". The radio link is then taken down to conserve energy but the logical signaling link to the AMF in the core network remains in place. When new data arrives from the network side for a UE, the network just forwards it to the gNB to which the user data tunnel is connected to.

The RRCResumeRequest message is used to request the resumption of a suspended RRC connection or perform an RNA (RAN Based Notification Area) update.

The terms base station and gNB or xNB will be considered as equivalent in the following description. Any BTS, NB, eNB, gNB, or ng-eNB constitutes a base station.

The home PLMN 11 comprises an AUSF/UDM 23 (Authentication Server Function / Unified Data Management).

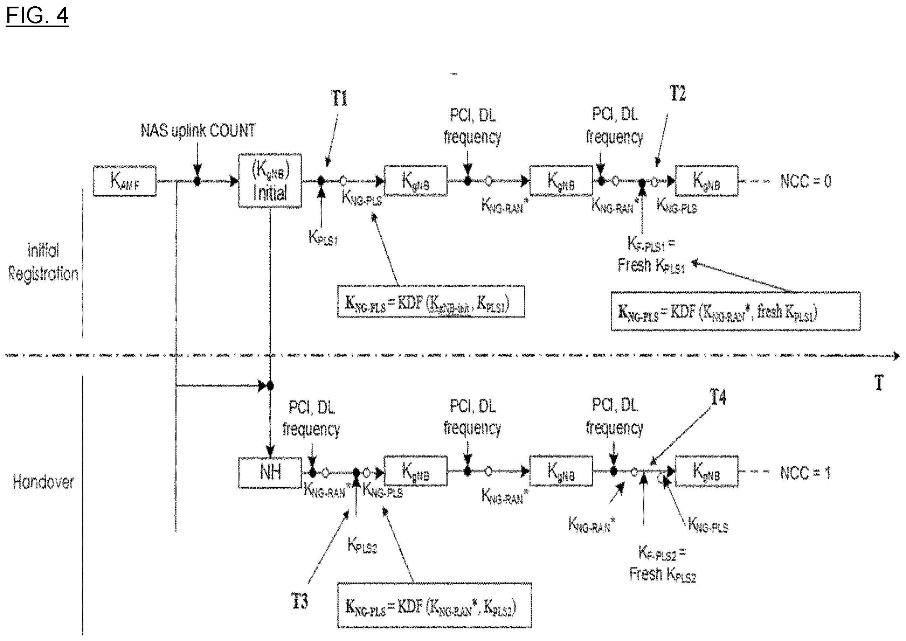

Regarding figure 4 that is based on figure 2 previously described, in detail, represents the following:
Time T is represented on the dotted horizontal axis separating the Initial Registration 100 and the handover 101 procedures.

During the Initial Registration 100 procedure (NCC=0), after having computed K_{gNB} Initial, the UE and the first base station measure a value PLS1 that permits to generate a key K_{PLS1} (generally speaking, a value P_{LSn} permits to deduce a key K_{PLSn}).

A time T1, instead of using an initial shared key K_{gNB} (or K_{gNB} Initial also called K_{gNB-init}) or K_{NB-RAN*} for encrypting the communication (as proposed by TS 133.501 version 17.5.0 mentioned above), the invention proposes to derive a new key K_{NG-PLS} based on K_{PLS1}: ${K}_{NG - PLS} = KDF \left({K}_{PLS 1}, {K}_{NG - RAN *}\right)$ with KDF a Key Derivation Function

and to use this derived key K_{NG-PLS} for performing the encryption of the communication. This key is hereafter called "shared encrypting secret key K_{NG-PLS}" because it is used for encryption purposes.

As explained previously, the key K_{NG-PLS} is computed by exploiting physical layer properties of the radio channel during a PLS-SKG procedure between the UE and the first base station with which the UE communicates.

The term "first" of "first shared encrypting secret key" can here be used in reference to a horizontal derivation (the UE is connected to a single base station and no handover occurs). The invention thus proposes to:
- derive, at the UE and at the first base station with which the UE communicates and that is connected to the core network, the first shared encrypting secret key K_{NG-PLS} from the initial shared key K_{gNB-init} and the first shared secret key K_{PLS-1}, for obtaining a first derived shared encrypting secret key K_{NG-PLS} for encrypting communication;
- use, at the UE and the first base station with which the UE communicates and that is connected to the core network, the first derived shared encrypting secret key K_{NG-PLS} instead of the initial shared key K_{gNB-init} for encrypting communication between the UE and the first base station.

In figure 4, K_{NG-PLS} is after that again called K_{gNB}, for being compliant with the terms used in the mentioned ETSI standard.

After this first key derivation, K_{NG-PLS} (again, called K_{gNB}) is derived once by using PCI and DL frequency, in compliance with the standard. This generates a new K_{gNB} key that is used for encryption purposes.

Then, it is decided, by the UE and the first base station, to compute a new K_{gNB} key at a time T2. For this purpose, K_{gNB} is in a first step derived by using again PCI and DL frequency, the resulting key being noted K_{NG-RAN*}, this key being further derived by the same KDF as above, based on a new (fresh) PLS measurement generating a key K_{F-PLS1} that replaces the previous key K_{PLS1} in the derivation.

We have then, after the time T2: ${K}_{NG - PLS} = {K}_{gNB} \left(after T2\right) = KDF \left({K}_{NG - RAN *}, {K}_{F - PLS 1}\right)$

Further key derivations with other keys K_{PLS} occur after that, in order to ensure confidentiality of the communication.

Thus, the first derived shared encrypting secret key K_{NG-PLS} is changed over time by deriving a refreshed first shared encrypting secret key, K_{F-NG-PLS}, from:
- a standardized shared key K_{NG-RAN*} according to TS 133.501 version 17.5.0;
- a refreshed shared secret key, K_{F-PLS1}, obtained by exploiting physical layer properties of the radio channel during a fresh PLS-SKG procedure on a later point of time, between the UE and the first base station.

The same mechanism is proposed by the invention in case of handover: At time T3, during the handover process (procedure 101), after having obtained the derived NH key and applied it to K_{AMF}, the resulting key is derived by using PCI and DL frequency for obtaining a key K_{NG-RAN*}, like recommended by the ETSI reference TS 133.501.

According to the invention, at T3, instead of using the initial shared key K_{gNB} or K_{NB-RAN*} for encrypting the communication, a new key K_{NG-PLS} is derived based on a value PLS2 permitting to determine a key K_{PLS2}. The reference 2 is given to this key since this reference is preferred in this description for addressing a handover situation. Thus, we have for this new derived key K_{NG-PLS}: ${K}_{NG - PLS} = KDF \left({K}_{PLS 2}, {K}_{NG - RAN *}\right)$ with KDF a Key Derivation Function
and this derived key K_{NG-PLS} is used for performing the encryption of the communication. This key K_{NG-PLS} can be called a "shared encrypting secret key" because it is used for encryption purposes.

The key K_{NG-PLS} is also computed by exploiting physical layer properties of the radio channel during a PLS-SKG procedure between the UE and the second base station with which the UE communicates in the procedure 101 of handover.

After this first key derivation in the handover procedure, K_{NG-PLS} (again, called K_{gNB}) is derived once by using PCI and DL frequency, in compliance with the standard. This generates a new K_{gNB} key that is used for encryption purposes.

Then, it is decided, by the UE and the second base station, to compute a new K_{gNB} key at a time T4. For this purpose, K_{gNB} is in a first step, derived by using again PCI and DL frequency, the resulting key being noted K_{NG-RAN*}, this key being further derived by the same KDF as above, based on a new (fresh) PLS measurement (PLS2) generating a key K_{F-PLS2} that replaces the previous key K_{PLS2} in the derivation.

We have then, after time T4: ${K}_{NG - PLS} = {K}_{F - PLS 2} = {K}_{gNB} \left(after T4\right) = KDF \left({K}_{NG - RAN *}, {K}_{F - PLS 2}\right)$ with "F" standing for "Fresh".

Further key derivations with other keys K_{PLS} occur after that for ensuring continuous confidentiality of the communication.

Annex 11 of the previously mentioned ETSI standard precises (in "K_{NG-RAN*} derivation function for target gNB"), that when deriving a K_{NG-RAN*} from the current K_{gNB} or from a fresh NH and the target physical cell ID in the UE and NG-RAN for handover purposes and transition from RRC_INACTIVE to RRC_CONNECTED states, the following parameters shall be used to form the input string S to the KDF:
- FC = 0x70
- P0 = PCI (target physical cell id)
- L0 = length of PCI (i.e. 0x00 0x02)
- P1 = ARFCN-DL (the absolute frequency of SSB of the target PCell as specified in clause 13.3 of TS 38.300)
- L1 = length of ARFCN-DL (i.e. 0x00 0x03) - ARFCN standing for Absolute radio-frequency channel number

The input key shall be the 256-bit NH when the index NCC in the handover increases, otherwise the current 256-bit K_{gNB} (when source is gNB) or K_{eNB} (when source is ng-eNB).

In the scope of this Annex 11, an example of a preferred KDF proposed by the invention is the following: The input string is used when the UE and the xNB derive K_{NG-PLS} during initial registration (procedure 100) or handover (procedure 101).

The following input parameters can be used:
- FC = 0x7y
- P0 = PLS
- L0 = length of PLS
- Initial Registration:
   - the input KEY shall be K_{gNB-init} , or
   - the input KEY shall be K_{NG-RAN}*

In summary, when the UE performs a handover from a first base station to a second base station, the UE and the second base station, for establishing a second shared encrypting secret key K_{NG-PLS} (key shared between the UE and the second base station):
- compute a second shared secret key K_{PLS-2} between the UE and the second base station exploiting physical layer properties of the radio channel during a PLS-SKG procedure between the UE and the second base station;
- derive the second shared encrypting secret key K_{NG-PLS} from a shared key K_{NG-RAN*} according to TS 133.501 version 17.5.0 and the second shared secret key K_{PLS-2}, for obtaining a second shared encrypting secret key K_{NG-PLS};
- **use, at the UE** and the second base station with which the **UE** communicates and that is connected to the core network, the second derived shared encrypting secret key K_{NG-PLS} instead of the shared key K_{NG-RAN*} according to TS 133.501 version 17.5.0.

And for performing, in case of handover, a further encryption according to the invention, the second shared encrypting secret key K_{NG-PLS} is changed over time by deriving a refreshed second shared encrypting secret key, K_{F-PLS2}, from:
- a standardized shared key K_{NG-RAN*} according to TS 133.501 version 17.5.0;
- a refreshed shared secret key, K_{F-PLS2}, obtained by exploiting physical layer properties of the radio channel during a fresh PLS-SKG procedure on a later point of time, between the **UE** and the second base station.

The invention also concerns a secure element of a UE, the secure element being arranged for computing a shared encrypting secret key K_{NG-PLS} for encrypting communication between the UE and a base station, the secure element having computed a standardized shared key K_{NG-RAN*} according to TS 133.501 V 17.5.0 for example,
the secure element being also arranged for:
- computing a shared secret key K_{PLS1}, K_{PLS2} obtained by exploiting physical layer properties of the radio channel during a PLS-SKG procedure between the UE and the base station;
- deriving the shared encrypting secret key K_{NG-PLS} from the shared key K_{NG-RAN*} and the shared secret key K_{PLS1}, K_{PLS2}, for obtaining a derived shared encrypting secret key K_{NG-PLS},
- using, at the secure element, the derived shared encrypting secret key K_{NG-PLS} instead of the shared key K_{NG-RAN*} for encrypting communication between the UE and the base station.

This secure element is also arranged for changing over time the derived shared encrypting secret key K_{NG-PLS} by deriving a refreshed shared encrypting secret key, K_{F-NG-PLS}, from:
- the standardized shared key K_{NG-RAN*} according to TS 133.501 (V 17.5.0 for example);
- a refreshed shared secret key, K_{F-PLS}, obtained by exploiting physical layer properties of the radio channel during a PLS-SKG procedure, on a later point of time, between the UE and the base station.

Additionally, the invention concerns a base station of a telecommunication network provided for communicating with a UE, the base station being arranged for computing a shared encrypting secret key K_{NG-PLS} for encrypting communication between the base station and the UE, the base station having computed a standardized shared key K_{NG-RAN*} according to TS 133.501 (V 17.5.0 for example),
the base station being also arranged for:
- computing a shared secret key K_{PLS1}, K_{PLS2} obtained by exploiting physical layer properties of the radio channel during a PLS-SKG procedure between the base station and the UE;
- deriving the shared encrypting secret key K_{NG-PLS} from the shared key K_{NG-RAN*} and the shared secret key K_{PLS1}, K_{PLS2}, for obtaining a derived shared encrypting secret key K_{NG-PLS},
- using the derived shared encrypting secret key K_{NG-PLS} instead of the shared key K_{NG-RAN*} for encrypting communication between the base station and the UE.

The base station according to the invention is also arranged for changing over time the derived shared encrypting secret key K_{NG-PLS} by deriving a refreshed shared encrypting secret key, K_{F-NG-PLS}, from:
- the standardized shared key K_{NG-RAN*} according to TS 133.501 (V 17.5.0 for example);
- a refreshed shared secret key, K_{F-PLS}, obtained by exploiting physical layer properties of the radio channel between the base station and the UE during a PLS-SKG procedure, on a later point of time.

Finally, the invention concerns a system for establishing a first shared encrypting secret key K_{NG-PLS} for encrypting communication between:
- a User Equipment, **UE,** comprising a secure element, and
- a first base station connected to the core network of a telecommunication network,
the **UE** and the first base station storing an initial shared key K_{gNB-init} according to TS 133.501 (V 17.5.0 for example), the system being arranged for, at the secure element and at the first base station:
- computing a first shared secret key K_{PLS-1} between the **UE** and the first base station by exploiting physical layer properties of the radio channel during a PLS-SKG procedure between the **UE** and the first base station;
- **deriving,** the first shared encrypting secret key K_{NG-PLS} from the initial shared key K_{gNB-init} and the first shared secret key K_{PLS-1}, for obtaining a first derived shared encrypting secret key K_{NG-PLS} for encrypting communication;
- using the first derived shared encrypting secret key K_{NG-PLS} instead of the initial shared key K_{gNB-init} for encrypting communication between the **UE** and the first base station.

These arrangements comprise technical electronic means, typically computing means comprising a microprocessor and additional software.

These arrangements are provided for:
- changing the first derived shared encrypting secret key K_{NG-PLS} over time by deriving a refreshed first shared encrypting secret key, K_{F-NG-PLS}, from:
   - a standardized shared key K_{NG-RAN*} according to TS 133.501 (version 17.5.0 for example);
   - a refreshed shared secret key, K_{F-PLS1}, obtained by exploiting physical layer properties of the radio channel during a fresh PLS-SKG procedure on a later point of time, between the **UE** and the first base station.

When the **UE** performs a handover procedure from the first base station to a second base station, these processing or computing means provided at the **UE** and the second base station, for establishing a second shared encrypting secret key K_{NG-PLS} between the **UE** and the second base station:
- compute a second shared secret key K_{PLS-2} between the UE and the second base station exploiting physical layer properties of the radio channel during a PLS-SKG procedure between the **UE** and the second base station;
- derive the second shared encrypting secret key K_{NG-PLS} from a shared key K_{NG-RAN*} according to TS 133.501 (version 17.5.0 for example) and the second shared secret key K_{PLS-2}, for obtaining a second shared encrypting secret key K_{NG-PLS};
- use, at the **UE** and at the second base station, the second derived shared encrypting secret key K_{NG-PLS} instead of the shared key K_{NG-RAN*} according to TS 133.501 (version 17.5.0 for example).

**These means,** at the **UE** and the second base station, change advantageously the second shared encrypting secret key K_{NG-PLS} over time by deriving a refreshed second shared encrypting secret key, K_{F-NG-PLS}, from:
- a standardized shared key K_{NG-RAN*} according to TS 133.501 (version 17.5.0 for example);
- a refreshed shared secret key, K_{F-PLS2}, obtained by exploiting physical layer properties of the radio channel during a fresh PLS-SKG procedure on a later point of time, between the **UE** and the second base station.

The advantages of the invention are that protection of the Access Stratum is enhanced without impact on the core network.

The invention takes place at L1 and L2 only (physical and data layers), the network layer L3 is not impacted.

Also, the proposed solution is very less costly than a solution based on Diffie-Hellman. The invention applies to 5G and future 6G networks and not only to terrestrial networks but also to non-terrestrial networks, such as satellite networks, unmanned aerial vehicles (UAV) networks and marine communication networks.

## Claims

1. **A method** for establishing a first shared encrypting secret key K_{NG-PLS} for encrypting communication between:
- a User Equipment, **UE** (10), comprising a secure element, and
- a first base station (11) to which said **UE** (10) is connected,
said **UE** (10) and said first base station (11) having computed an initial shared key K_{gNB-init} according to TS 133.501, said method comprising:
- computing at said **UE** (10) and said first base station (11), a first shared secret key K_{PLS-1} between said **UE** (10) and said first base station (11) by exploiting physical layer properties of the radio channel during a PLS-SKG procedure between said **UE** (10) and said first base station (11);
- deriving, at said **UE** (10) and at said first base station (11) connected to a core network (13), said first shared encrypting secret key K_{NG-PLS} from said initial shared key K_{gNB-init} and said first shared secret key K_{PLS-1}, for obtaining a first derived shared encrypting secret key K_{NG-PLS} for encrypting communication;
- using, at said **UE** (10) and at said first base station (11), said first derived shared encrypting secret key K_{NG-PLS} instead of said initial shared key K_{gNB-init} for encrypting communication between said **UE** (10) and said first base station (11).

2. The method according to claim 1, wherein said first derived shared encrypting secret key K_{NG-PLS} is changed over time by deriving a refreshed first shared encrypting secret key, K_{F-NG-PLS}, from:
- a standardized shared key K_{NG-RAN*} according to TS 133.501;
- a refreshed shared secret key, K_{F-PLS1}, obtained by exploiting physical layer properties of the radio channel during a fresh PLS-SKG procedure on a later point of time, between said **UE** (10) and said first base station (11).

3. The method according to claim 1 or 2, wherein, when said **UE** (10) performs a handover procedure from said first base station (11) to a second base station (12), said **UE** (10) and said second base station (12), for establishing a second shared encrypting secret key K_{NG-PLS} between said **UE** (10) and said second base station (12):
- **compute** a second shared secret key K_{PLS-2} between said **UE** (10) and said second base station (12) exploiting physical layer properties of the radio channel during a PLS-SKG procedure between said **UE** (10) and said second base station (12);
- derive said second shared encrypting secret key K_{NG-PLS} from a shared key K_{NG-RAN*} according to TS 133.501 and said second shared secret key K_{PLS-2}, for obtaining a second shared encrypting secret key K_{NG-PLS};
- use, at said **UE** (10) and at said second base station (12), said second derived shared encrypting secret key K_{NG-PLS} instead of said shared key K_{NG-RAN*} according to TS 133.501.

4. The method according to claim 3, wherein said second shared encrypting secret key K_{NG-PLS} is changed over time by deriving a refreshed second shared encrypting secret key, K_{F-NG-PLS}, from:
- a standardized shared key K_{NG-RAN*} according to TS 133.501;
- a refreshed shared secret key, K_{F-PLS2}, obtained by exploiting physical layer properties of the radio channel during a fresh PLS-SKG procedure on a later point of time, between said **UE** (10) and said second base station (12).

5. A secure element of a User Equipment, **UE** (10), said secure element being arranged for computing a shared encrypting secret key K_{NG-PLS} for encrypting communication between said **UE** (10) and a base station, said secure element having computed a standardized shared key K_{NG-RAN*} according to TS 133.501,
said secure element being also arranged for:
- computing a shared secret key (K_{PLS1}, K_{PLS2}) obtained by exploiting physical layer properties of the radio channel during a PLS-SKG procedure between said **UE** (10) and said base station;
- deriving said shared encrypting secret key K_{NG-PLS} from said shared key K_{NG-RAN*} and said shared secret key (K_{PLS1}, K_{PLS2}), for obtaining a derived shared encrypting secret key K_{NG-PLS},
- using, at said secure element, said derived shared encrypting secret key K_{NG-PLS} instead of said shared key K_{NG-RAN*} for encrypting communication between said UE (10) and said base station.

6. **The secure** element of claim 5, wherein said secure element is also arranged for changing over time said derived shared encrypting secret key K_{NG-PLS} by deriving a refreshed shared encrypting secret key, K_{F-NG-PLS}, from:
- said standardized shared key K_{NG-RAN*} according to TS 133.501;
- a refreshed shared secret key, K_{F-PLS}, obtained by exploiting physical layer properties of the radio channel during a PLS-SKG procedure, on a later point of time, between said **UE** (10) and said base station.

7. A base station of a telecommunication network (13) provided for communicating with a User Equipment, **UE** (10), said base station being arranged for computing a shared encrypting secret key K_{NG-PLS} for encrypting communication between said base station and said **UE** (10), said base station having computed a standardized shared key K_{NG-RAN*} according to TS 133.501,
said base station being also arranged for:
- computing a shared secret key (K_{PLS1}, K_{PLS2}) obtained by exploiting physical layer properties of the radio channel during a PLS-SKG procedure between said base station and said **UE** (10);
- deriving said shared encrypting secret key K_{NG-PLS} from said shared key K_{NG-RAN*} and said shared secret key (K_{PLS1}, K_{PLS2}), for obtaining a derived shared encrypting secret key K_{NG-PLS},
- using said derived shared encrypting secret key K_{NG-PLS} instead of said shared key K_{NG\-RAN*} for encrypting communication between said base station and said **UE** (10).

8. The base station of claim 7, wherein said base station is also arranged for changing over time said derived shared encrypting secret key K_{NG-PLS} by deriving a refreshed shared encrypting secret key, K_{F-NG-PLS}, from:
- said standardized shared key K_{NG-RAN*} according to TS 133.501;
- a refreshed shared secret key, K_{F-PLS}, obtained by exploiting physical layer properties of the radio channel between said base station and said **UE** (10) during a PLS-SKG procedure, on a later point of time.

9. A system for establishing a first shared encrypting secret key K_{NG-PLS} for encrypting communication between:
- a User Equipment, **UE** (10), comprising a secure element, and
- **a first base** station (11) part of radio access network connected to a network (13),
said **UE** (10) and said first base station (11) storing an initial shared key K_{gNB-init} according to TS 133.501, said system comprising, at said secure element and at said first base station (11), means for:
- computing a first shared secret key K_{PLS-1} between said **UE** (10) and said first base station (11) by exploiting physical layer properties of the radio channel during a PLS-SKG procedure between said UE (10) and said first base station (11);
- deriving, said first shared encrypting secret key K_{NG-PLS} from said initial shared key K_{gNB-init} and said first shared secret key K_{PLS-1}, for obtaining a first derived shared encrypting secret key K_{NG-PLS} for encrypting communication;
- using said first derived shared encrypting secret key K_{NG-PLS} instead of said initial shared key K_{gNB-init} for encrypting communication between said **UE** (10) and said first base station (11).

10. The system according to claim 9, wherein said means are provided for:
- changing said first derived shared encrypting secret key K_{NG-PLS} over time by deriving a refreshed first shared encrypting secret key, K_{F-NG-PLS}, from:
- a standardized shared key K_{NG-RAN*} according to TS 133.501;
- a refreshed shared secret key, K_{F-PLS1}, obtained by exploiting physical layer properties of the radio channel during a fresh PLS-SKG procedure on a later point of time, between said **UE** (10) and said first base station (11).

11. The system according to claim 9 or 10, wherein, when said **UE** (10) performs a handover procedure from said first base station (11) to a second base station (12), said means, at said UE (10) and said second base station (12), for establishing a second shared encrypting secret key K_{NG-PLS} between said **UE** (10) and said second base station (12):
- compute a second shared secret key K_{PLS-2} between said **UE** (10) and said second base station (12) exploiting physical layer properties of the radio channel during a PLS-SKG procedure between said **UE** (10) and said second base station (12);
- derive said second shared encrypting secret key K_{NG-PLS} from a shared key K_{NG-RAN*} according to TS 133.501 and said second shared secret key K_{PLS-2}, for obtaining a second shared encrypting secret key K_{NG-PLS};
- use, at said **UE** (10) and said second base station (12), said second derived shared encrypting secret key K_{NG-PLS} instead of said shared key K_{NG-RAN*} according to TS 133.501.

12. The system according to claim 11, wherein said means, at said UE (10) and said second base station (12), change said second shared encrypting secret key K_{NG-PLS} over time by deriving a refreshed second shared encrypting secret key, K_{F-NG-PLS}, from:
- a standardized shared key K_{NG-RAN*} according to TS 133.501;
- a refreshed shared secret key, K_{F-PLS2}, obtained by exploiting physical layer properties of the radio channel during a fresh PLS-SKG procedure on a later point of time, between said UE (10) and said second base station (12).
